Europäisches Patentamt

European Patent Office

Office européen des brevets

(11) Publication number: **0 396 515**
**A1**

## (12) EUROPEAN PATENT APPLICATION

(21) Application number: **90830190.6**

(22) Date of filing: **03.05.90**

(51) Int. Cl.⁵: **D06F 39/00**

(30) Priority: **04.05.89 IT 2037389**

(43) Date of publication of application:
**07.11.90 Bulletin 90/45**

(84) Designated Contracting States:
**DE ES FR GB SE**

(71) Applicant: **SMEG S.p.A.**
**Via Circonvallazione Nord, 36**
**Guastalla (Reggio Emilia)(IT)**

(72) Inventor: **Bertazzoni, Roberto**
**Via Maldotti, 2**
**I-Guastalla (Reggio Emilia)(IT)**

(74) Representative: **Adorno, Silvano et al**
**c/o SOCIETA' ITALIANA BREVETTI S.p.A. Via**
**Carducci, 8**
**I-20123 Milano(IT)**

(54) **Process and apparatus for recycling the washing water in washing machines with recovery of the rinsing agent.**

㊼ A process for recycling the washing water in washing machines is described with saving and recovery of the cleansing agent for a controlled drying thereof as well as an apparatus for carrying out such a process. The water to be cleaned is forwarded to a vacuum-tight vessel (8) at the inside of which the water is preferably caused to flow through a filled-type column (2) in order to increase the evaporating surface. From this vessel (8) steam is extracted which, upon compression, exchanges its heat with the water to be purified, so as to condense. The condensate, substantially without any impurities, which due to their lower vapour pressure permain in the column filling (2), is used again in the washing cycle. According to an alternative embodiment the heat exchange of the compressed steam may be accomplished at a condition of thermal conduction with the washing tank (1a) itself, which transmits its latent heat vaporization and may be useful for drying the washed clothes.

Fig.1

EP 0 396 515 A1

The present invention relates to a process and apparatus for recycling the washing water in washing machines with saving and recovery of the cleansing agent for a controlled disposal thereof.

It is known that in a usual washing cycle in a washing machine the volume of employed water amounts to about one hundred liters. It is also known that, under the spur of a greater respect of the environment and a possible lack of water in particulary dry locations, it has been tried to further reduce the consumption. It is foreseen that with a new generation of washing machines, now still under planning, the required quantities of water can decrease down to values in the order of about seventy liters. Further reductions can not be conceived without a substantial change of mind with reference to the use cycle and a completely replanning thereof, based on new principles.

Furthermore it is known the basic importance that the disposal of the cleansing agents has for the environment and it is clear the advantage which could derive from a solution of this problem in association with a solution of the above-mentioned problem relating to the optimization of water cycle.

According to the invention this is obtained by means of a distillation process through the steps of extraction of steam from the water containing impurities, compression of this steam, heat exchange between the latter and the water to be purified until the condensation of the steam and subsequent re-use of the condensate for the washing cycle.

According to a preferred first embodiment of the apparatus for accomplishing the process, the water to be cleaned is forwarded to a vacuum-tight vessel within which is caused to flow through a filled-type column in order to improve evaporation and the steam is drawn off from said vessel by means of a vacuum pump-compressor unit the outlet of which is fed to a heat exchanger immersed in the water to be cleaned at the inside of said vessel, whereby the steam transmits its latent heat of vaporization to the exchanger and hence to the water to be cleaned, thus aiding evaporation of the latter and supplying condensed water which is used again in the washing cycle.

According to another embodiment of the apparatus of the invention, this vacuum-tight vessel is provided by the washing tank/drum assembly itself and the heat exchanger is in a thermal conduction relationship with this assembly, whereby the latent heat of condensation transmitted thereto, while enhancing the washing water evaporation, also aids the drying of the clothes at the inside of the drum.

Therefore, according to the present invention, it is performed a process of distillation of the water used in the washing cycle by means of heat pumps in which the compression portion of a refrigerating cycle is used for evaporation of the water containing impurities and the portion of expansion is used for condensat ion of the purified water, furthermore with some saving of cooling water in comparison with the conventional distillators. Additionally, thus softened water needs a less quantity of cleansing agent for a given quantity and quality of washing.

On the other side it is not even required that the recovered water has necessarily a very high level of purity, whereby there are no contra-indications to the use of a heat pump employing directly in the refrigerating cycle the washing water itself containing cleasing agent and other impurities.

These and additional objects, advantages and features of the process according to the present invention will be clear to those skilled in the art from the following detailed description of a preferred embodiment, with a variation thereof, of an apparatus for carrying out such a process, with reference to the annexed drawings in which:

FIGURE 1 shows a schematic view, in its generality, of an apparatus for accomplishing the process according to the present invention; and

FIGURE 2 shows a view, also schematic, of an alternative embodiment, particularly advantgeous, of the apparatus of Fig. 1.

With reference to the drawings, the process according to the invention essentially comprises the distillation of the water from a washing cycle carried on in a tank-drum unit 1, 1a, through the stages of evaporation, extraction and compression of the vapour in a pump-compressor unit 4, 4a, as well as exchange of the heat of the compressed vapour with the water itself to be purified (in 5, 5a) until obtaining the condensation of the vapour and its re-use in the washing cycle.

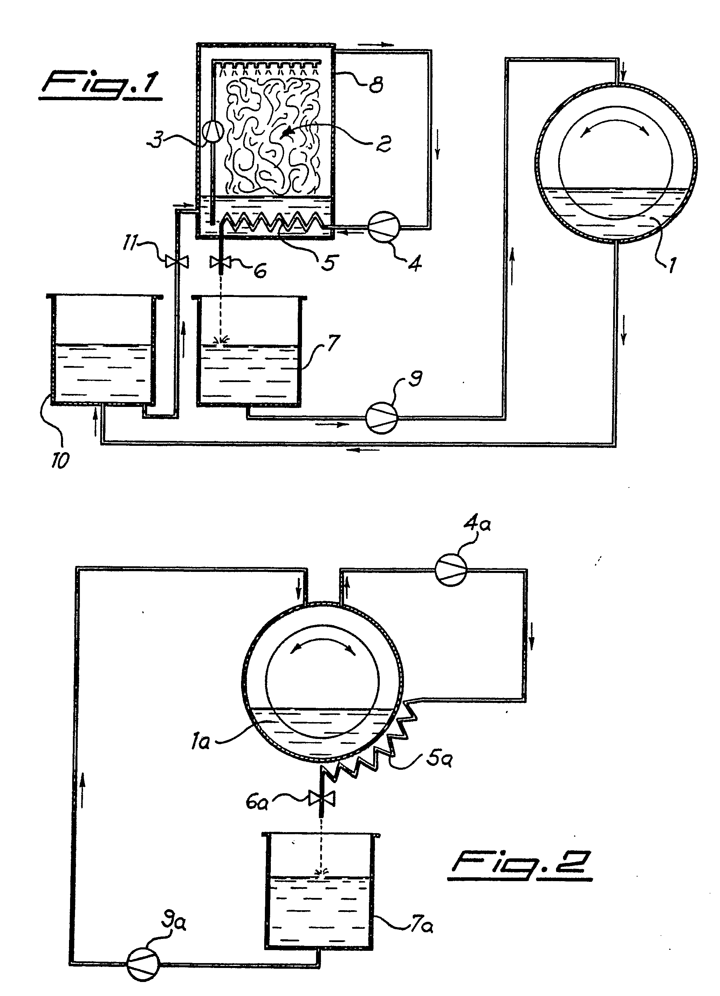

With the embodiment of Fig. 1, the water used for washing in 1 is forwarded, passing through a storage container 10 of the water to be purified, into a vacuum-tight vessel 8 in which a filled-type column 2 is e.g. provided, capable of substantially increasing the vaporisation surface. The filler material 2 is continuously crossed by the water to be purified which is caused to circulate by a pump 3 at the inside of vessel 8. The upper portion of vessel 8 is in communication with a unit 4 comprising a vacuum pump and compressor, which sucks in the arrow direction the steam evaporated at the inside of vessel 8, after having purged the air initially contained therein. As the vessel 8 is vacuum-tight sealed, the suction due to the pump 4 gives rise to the passage of liquid from the container 10 to the vessel 8 itself. The vacuum created in the latter draws in fact liquid from container 10, e.g. through an electrovalve 11 being controlled by a pressure switch and provided in the connecting pipe between the two receptacles. The inlet to 8 of the water to be purified will be preferably placed near the vessel bottom.

The compressed vapour at the outlet of unit 4 is conveyed to a heat exchanger 5 provided for example by a pipe coil immersed in the water to be·purified at the inside of vessel 8. At the pressure conditions produced in 4 and controlled by valve 6, the water vapour is obliged to condense and to transmit its latent heat of condensation to the heat exchanger 5, which in turn transmits this heat to the water to be purified for the subsequent evaporation, thus closing the cycle of thermal recovery. The condensed water drips by gravity through valve 6 and is collected in an underlying container 7 for the subsequent re-use in the washing cycle in the drum 1 toward which it is conveyed through a feed pump 9.

It will be appreciated that the water cycle will be thereby closed at this point and the apparatus can therefore use again and indefinitely the same water, there being required a pipe fitting with the water supply system only for refilling reasons in order to compensate the unavoidable losses essentially due to the evaporation to the outside and the water remaining to soak the clothes at the end of each washing cycle in 1.

It will be understood that the impurities, in particular the cleansing agents, have a lower vapour pressure and thus they remain in the filler material forming the column 2, which e.g. may be of a material to be disposed of together with the residue itself.

Furthermore, in order to save space, only one storage receptacle could be provided, comprising two containers 7 and 10 for the treated water and the water to be processed, with a floppy partition, free of laterally moving, thus adapting itself to the various volumes being formed at each time in the two portions of the container, in any case providing the same maximum height for both of them.

According to a particular aspect of the present invention the same process can be used, with simple adaptations of the apparatus, for drying the clothes at the end of the washing cycle, as schematically shown in Fig. 2.

With reference to this figure it can be seen that no separate vessel is provided which is vacuum-tight and at the inside of which evaporation should occur, possibly helped by the filled-type column through which the water from washing step is caused to circulate, but it is the tank-drum unit itself which forms such a vessel upon being suitably modified in its mechanical strength and tightness. Such an assembly has been indicated in Fig. 2 with reference number 1a and in general the reference numerals used in Fig. 2 are the same as those adopted for the corresponding details of Fig. 1, with only the addition of letter a.

It is observed that in this embodiment, which of course requires much less room, the compressor 4a sucks the vapour directly from 1a, the tightness of which will be necessarily only partial, so as to lower, while reducing the pressure at the inside, the boiling temperature of the liquid soacking the clothes within the drum. Like in the embodiment described and according to the process of the invention, the vapour at the outlet of compressor 4a is caused to pass through a heat exchanger which in this case is in thermal conduction relationship with the washing tank of the assembly 1a, thus returning thereto the latent heat of condensation in addition to the heat produced by the mechanical losses in the compressor. This heat together with the pressure reduction at the inside of 1a gives rise to the state conversion liquid-vapour from the whole mass of clothes which thus can be taken off dry upon washing.

Of course also in this case from the valve 6a at the outlet of the heat exchanger 5a the condensed water drips by gravity into an underlying collecting container 7a from which water is drawn and fed again to the tank of the washing unit 1a through a feed pump 9a.

## Claims

1. Process of recycling washing water in washing machines, characterized by water distillation through the steps of extracting vapour from water containing impurities, compressing the extracted vapour and exchanging heat of the latter with water to be purified, condensing and re-using the condensed water for feeding the washing cycle.

2. A process according to claim 1, characterized by comprising in addition the step of circulating the water to be purified, before extracting vapour, through a filled-type column adpated to enhance the evaporation.

3. An apparatus for recycling the washing water in washing machines comprising a tank-drum unit (1; 1a) and characterized by a vacuum-tight vessel (8; 1a) containing the water to be purified and communicating with means (4; 4a) for extracting water vapour from said vessel and for compressing it to forward the same to a heat exchanger (5; 5a) in thermal conduction relationship with said vessel (8; 1a), the condensed water from said heat exchanger being collected in a container (7; 7a) to be fed again, through a feed pump (9; 9a) to the washing tank-drum unit (1; 1a).

4. An apparatus according to claim 3, characterized in that said vacuum-tight vessel (8) is in communication with said washing tank-drum (1) assembly from which it receaves the water to be purified and contains a filled-type column (2) suitable to enhance the inside evaporation at the inside of the vessel itself.

5. An apparatus according to claim 4, characterized by further comprising a circulating pump (3) capable of causing the material of the filled-type column (2) to be crossed by the water to be purified.

6. An apparatus according to claim 4 or 5, characterized by comprising an intermediate container (10) between the washing tank-drum (1) and said vacuum-tight vessel (8), the communication with the latter occurring through an electrovalve (11) controlled by a pressure switch responsible to the pressure values, near to the vacuum situation, existing at the inside of vessel (8).

7. An apparatus according to claim 6, characterized by the fact that the container (10) is contiguous to said vessel (7) from which it is separated by means of a floppy partition wall within a single container comprising both of them.

8. An apparatus according to claim 3, characterized in that said vacuum-tight vessel is formed of the washing tank-drum (1a) assembly itself, to which the heat exchanger (5a) transmits the condensation heat of the vapour extracted and compressed by a vacuum pump-compressor unit (4a), wherein the evaporation in (1a) enhances the drying of the clothes contained at the inside.

9. An apparatus according to whichever of claims 3-8, characterized by comprising a valve (6, 6a) at the outlet from the heat exchanger (5, 5a) to control the pressure conditions at the outlet of said pump-compressor means (4, 4a).

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3617314 (MULTIMATIC MASCHINEN GMBH & CO) <br> * column 4, line 60 - column 5; figure * | 1, 3, 6 | D06F39/00 |
| A | FR-A-1201674 (BALASKOVIC) <br> * the whole document * | 3, 8 | |
| A | DE-C-283533 (MAX SCHREIBER) <br> * claim 1; figures * | 1 | |

**TECHNICAL FIELDS SEARCHED (Int. Cl.5 )**

D06F

The present search report has been drawn up for all claims

| Place of search | Date of completion of the search | Examiner |
|---|---|---|
| THE HAGUE | 03 AUGUST 1990 | COURRIER G.L.A. |

EPO FORM 1503 03.82 (P0401)